# EUROPÄISCHE PATENTSCHRIFT

(11) **EP 1 854 618 B1**
(45) Veröffentlichungstag und Bekanntmachung des Hinweises auf die Patenterteilung: **12.12.2012**
(21) Anmeldenummer: 06009789.6
(22) Anmeldetag: 11.05.2006
(51) Int. Cl.: B29C 65/08, B65B 51/22

(54) **Vorrichtung zum Ultraschallschweissen**
Device for ultrasonic welding
Dispositif pour soudage par ultrasons

(43) Veröffentlichungstag der Anmeldung: 14.11.2007
(73) Patentinhaber: INDAG Gesellschaft für Industriebedarf mbH & Co. Betriebs KG, 69214 Eppelheim (DE)
(72) Erfinder: Wild, Hans-Peter, Dr., 69214 Eppelheim (DE); Kraft, Eberhard, 74924 Neckarbischofsheim (DE); Lechert, Frank, 69469 Weinheim (DE)
(74) Vertreter: Grünecker, Kinkeldey, Stockmair & Schwanhäusser

(56) Entgegenhaltungen:
- EP-A1- 1 745 916
- WO-A-2006/041380
- FR-A- 2 829 962
- JP-A- 52 125 540
- US-A- 2 834 395
- US-B1- 6 313 440
- PATENT ABSTRACTS OF JAPAN Bd. 005, Nr. 119 (M-081), 31. Juli 1981 (1981-07-31) -& JP 56 058822 A (YUASA BATTERY CO LTD), 22. Mai 1981 (1981-05-22)

## Beschreibung

Die Erfindung betrifft eine Vorrichtung zum Ultraschallschweißen. Eine solche Vorrichtung wird beispielsweise zum Verschließen von Folienbeuteln eingesetzt, bei denen nach dem Befüllen der Folienbeutel das obere Ende hiervon verschlossen werden muss. Zum Verschließen der Folienbeutel wird das obere Ende zwischen Ultraschallhammer- und Amboss eingeklemmt und dann durch Anlegen von Ultraschall, der von dem Ultraschallhammer ausgesandt wird, zugeschweißt.

Für eine gute Schweißnaht ist es vorteilhaft, dass Amboss und Ultraschallhammer gut flächigen Kontakt haben, um so die Einkopplung der Ultraschallwellen in das Folienmaterial flächig zu gewährleisten.

Um das zu verschweißende Material zwischen Ultraschallhammer und Amboss einklemmen zu können, müssen diese beiden Teile beweglich gegeneinander ausgebildet sein.

Aufgabe der vorliegenden Erfindung ist es, diese Beweglichkeit so zu erhalten, dass gut dichtende Schweißnähte erhalten werden und die Vorrichtung wenig Abnutzung zeigt.

Diese Aufgabe wird gelöst durch eine Vorrichtung nach Anspruch 1. Bevorzugte Ausführungsformen sind in den Unteransprüchen offenbart.

Erfindungsgemäß ist der Amboss an einem Parallelhebel gelagert, der zwei Hebel aufweist, die um Achsen schwenkbar und parallel zueinander ausgerichtet sind. Durch diese Lagerung wird die Parallelität der Oberfläche des Ambosses und des Ultraschallhammers bei jeder Position gewährleistet. Dadurch wird ein Abrieb zwischen Amboss und Ultraschallhammer minimiert, da immer ein flächiger Kontakt bei den verschiedenen Positionen, die Amboss und Ultraschallhammer relativ zueinander einnehmen können, gegeben ist.

Bevorzugterweise ist der Amboss hängend an dem Parallelhebel gelagert, um so eine definierte Ruheposition vorzugeben.

Der Parallelhebel ist vorzugsweise an einem Halter befestigt, wobei der Halter selbst um eine Achse schwenkbar ist. Falls diese Achse in etwa senkrecht zu den Achsen liegt, um die der Parallelhebel schwenkt, dann kann sich der Amboss in zwei Dimensionen der Lage und Orientierung des Ultraschallhammers anpassen, sodass ein gleichmäßiger Kontaktdruck zwischen Ultraschallhammer und Amboss entlang der Schweißstelle gewährleistet wird.

Der Amboss ist weiterhin vorzugsweise mit Vorspannmitteln in Richtung zu einem Ultraschallhammer vorgespannt. Dadurch kann der Ultraschallhammer das zu schweißende Material (z. B. Folienbeutel) gegen den Amboss drücken und den Amboss leicht zurückdrücken, sodass ein vordefinierter Druck zwischen Amboss und Ultraschallhammer wirkt.

Weiterhin ist der Amboss vorzugsweise mit einem Dämpfungsmittel gekoppelt, das eine Bewegung des Ambosses dämpft. Dadurch wird erreicht, dass nach Zusammenführen von Ultraschallhammer und Amboss sich möglichst schnell der bleibende Kontakt zwischen Hammer und Amboss mit dem dazwischen eingeklemmten Schweißmaterial ergibt. Ein etwaiges Prellen kann so weitgehend unterdrückt werden.

Vorteilhaft ist eine Ausführungsform, bei der mehrere Ambosse parallel nebeneinander angeordnet sind. Zum Schweißen von mehreren Schweißstellen, ist es möglich, mehrere Schweißstellen mit ein- und demselben Amboss zu schweißen. Weiterhin ist es möglich, mehrere unabhängige Ambosse nebeneinander vorzusehen. Letzteres hat den Vorteil, dass sich der Amboss individuell in seiner Position dem Ultraschallhammer bzw. dem dazwischen eingeklemmten Material anpassen kann, sodass über die Schweißstelle hinweg ein gleichmäßiger Druck gewährleistet wird. Je größer der Amboss, desto schwieriger ist es, über die gesamte Schweißstelle hinweg einen gleichbleibenden Druck zu erreichen. Hierzu ist auch vorzugsweise der Parallelhebel an einem eigenen schwenkbaren Halter angeordnet.

Zur Vereinfachung der Konstruktion sind mehrere schwenkbare Halter an einem gemeinsamen Träger gelagert.

Eine beispielhafte Ausführungsform der Erfindung ist in den Figuren gezeigt. Dabei zeigt:
- Figur 1: eine dreidimensionale schematische Darstellung eines Ambosses und seiner Lagerung;
- Figur 2: eine schematische Schnittzeichnung der Vorrichtung aus Figur 1;
- Figur 3: eine dreidimensionale schematische Darstellung von mehreren Ambossen nebeneinander.

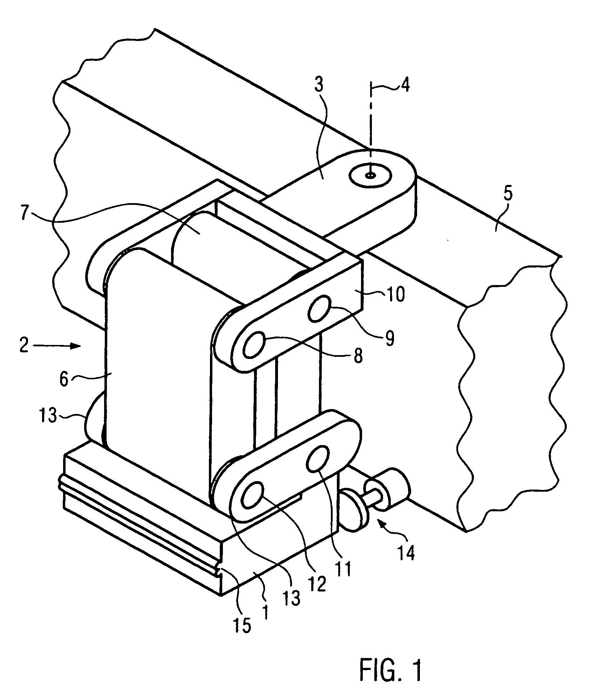

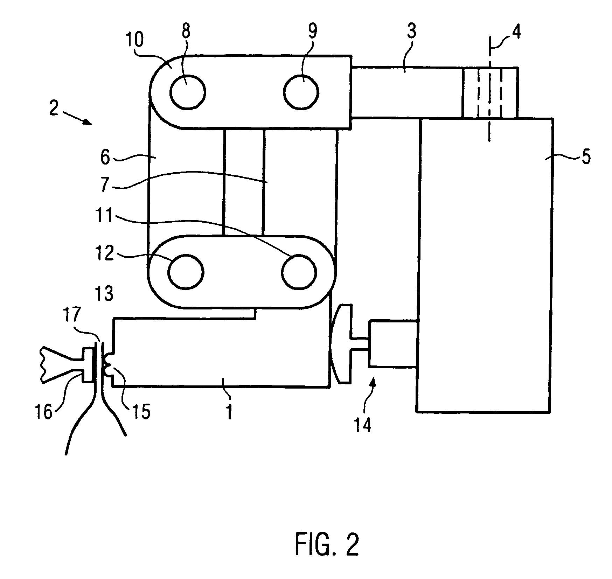

In Figur 1 und 2 ist ein Amboss 1 gezeigt, der an einem hängenden Parallelhebel 2 hängt. Der Parallelhebel 2 weist zwei Hebel 6, 7 auf, die um Achsen 8, 9 schwenkbar gelagert sind und parallel zueinander ausgerichtet sind. Am unteren Ende des Parallelhebels sind zwei Querstücke 13 vorgesehen, die die beiden unteren Enden der Parallelhebel 6, 7 miteinander verbinden. Hierbei sind zwei schwenkbare Achsen 11 und 12 vorgesehen. Der Amboss 1 ist an den unteren Querteilen 13 angeordnet. Die Achsen 8 und 9 sind in oberen Querteilen 10 gelagert, die ihrerseits an einem Halter 3 befestigt sind. Der Halter 3 erstreckt sich von dem Parallelhebel 2 im Wesentlichen in horizontaler Richtung weg. An seinem Ende ist der Halter 3 schwenkbar um eine Achse 4 gelagert. Der Halter 3 ist mit dieser Achse auf einem Träger 5 gelagert.

Der Amboss 1 weist an seiner Vorderseite Schweißlippen 15 auf, wobei hier sowohl eine einzelne Schweißlippe als auch mehrere Lippen vorgesehen sein können, je nachdem, wie viele Schweißnähte ausgebildet werden sollen. Die Anordnung von zwei Schweißnähten dicht nebeneinander hat sich als sehr vorteilhaft erwiesen.

An der der Schweißlippe 15 abgewandten Seite greift ein Element 14 an. Statt direkt an den Amboss anzugreifen kann es auch an den Parallelhebel oder ein sonstiges bewegliches Teil angreifen. Dieses Element 14 kann eine federnde und/oder eine dämpfende Wirkung haben. Mit dem Element 14 oder einem anderen federnden Element wird der Amboss 1 in Richtung zu einem Ultraschallhammer hin vorgespannt. Das Element 14 oder das andere federnde Element kann einen Kolben aufweisen, der gegen den Amboss 1 drückt, sei es durch Druckluft, durch die Kraft einer Feder oder eines elastischen Elements oder durch eine sonstige Kraft.

Das Element 14 oder ein daneben angeordnetes Element, das mit dem Amboss 1 oder einem beweglichen Teil des Parallelhebels 2 zusammenwirkt, kann auch dämpfend auf die Bewegung des Ambosses 1 und des Parallelhebels 2 wirken, um so die Bewegung des Ambosses 1 zu dämpfen. Dies ist insbesondere bei einem Schweißen mit hohen Geschwindigkeiten von Vorteil, da nach Zusammenführen von Ultraschallhammer 16 und Amboss 1 möglichst schnell eine ruhige Lage des Ambosses 1 erreicht werden soll, um mit dem dann gleichmäßig vorliegenden Druck das Ultraschallschweißen vornehmen zu können.

Vorzugsweise ist an jedem Ende des Ambosses 1 ein Element 14 vorgesehen, also vorzugsweise zwei Elemente 14 je Amboss.

Das federnde Element (z. B. Element 14), das den Amboss 1 in Richtung zu dem Ultraschallhammer 16 vorspannt, kann so ausgestaltet sein, dass es den Amboss nur bis in eine gewisse Maximalauslenkung in Richtung des Ultraschallhammers 16 vorspannt, den Amboss jedoch nicht weiter auszulenken vermag. In diesem Fall ist es sinnvoll, ein weiteres Element vorzusehen, das den Parallelhebel 2 oder den Amboss 1 gegen das federnde Element (z. B. Element 14) in diese Position leicht vorspannt, um dem Amboss 1 so eine definierte Position zu geben. Die Kraft, die den Amboss 1 in Richtung auf das federnde Element vorspannt, sollte dann kleiner sein, als die Kraft, die durch das federnde Element zur Verfügung gestellt wird.

Der Ultraschallhammer 16 in Figur 2 kann von dem Amboss 1 wegbewegt werden, um das obere Ende des Schweißmaterials 17 (eines Folienbeutels) zwischen Amboss 1 und Ultraschallhammer 16 einzuklemmen. Dazu wird der Ultraschallhammer 16 dann auf den Amboss 1 draufgeschoben, wobei das Material 17 eingeklemmt wird. Der Amboss 1 wird sich dabei in Figur 2 leicht nach rechts verlagern, entgegen der Vorspannkraft durch das federnde Element 14.

In dieser Position mit dem kontrollierten Druck zwischen Ultraschallhammer 16 und Amboss 1 kann das Schweißen des Materials 17 gut durchgeführt werden.

Es kann jedoch auch der Träger 5 beweglich ausgestaltet sein, um den Amboss daran von dem Ultraschallhammer wegzubewegen. Dadurch wird der Platz geschaffen, um die Folienbeutel zwischen Ultraschallhammer und Amboss einzuführen. Durch eine Bewegung des Trägers 5 in Richtung zu dem Ultraschallhammer wird das zu schweißende Material 17 dann eingeklemmt.

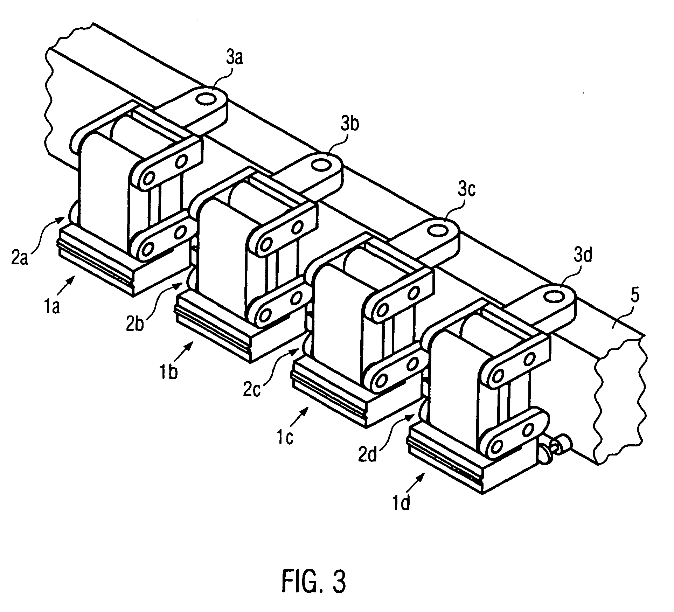

In Figur 3 ist eine Ausführungsform gezeigt, bei der mehrere Ambosse 1 a bis 1 d an mehreren Parallelhebeln 2 a bis 2 d nebeneinander angeordnet sind. Mit einer solchen Vorrichtung ist es möglich, mehrere Schweißvorgänge von mehreren Materialien nebeneinander durchzuführen. Beispielsweise ist es hiermit möglich, mehrere Folienbeutel nebeneinander zu verschweißen. Hiermit können Durchsatzraten signifikant erhöht werden. Die einzelnen Ambosse sind hier unabhängig voneinander gelagert, sodass sich jeder Amboss individuell durch den Parallelhebel und die Schwenkbarkeit des jeweiligen Halters 3a bis 3d orientieren kann. Die Halter 3 sind dann jedoch an einem gemeinsamen Träger 5 angeordnet, um eine kompakte Bauweise zu erhalten.

Vorzugsweise ist jedem Amboss ein separater Ultraschallhammer zugeordnet. Es ist jedoch auch möglich mehreren Ambossen oder allen Ambossen genau einen Ultraschallhammer zuzuordnen.

Die Beutel oder andere zu schweißende Artikel können den Ambossen in einer Richtung entlang der Reihe der Ambosse zugeführt werden oder auch nebeneinander in einer Richtung senkrecht dazu.

Wie in den Figuren 1 bis 3 zu erkennen, ist eine zweiteilige Schweißlippe 15 vorgesehen. Dies führt zu zwei nebeneinanderliegenden Schweißnähten mit denen eine Abdichtung von z. B. Folienbeuteln in besonders sicherer Weise gewährleistet wird. Durch die Lagerung des Ambosses 1 an dem Parallelhebel 2 können immer beide Dichtlippen mit dem Amboss 16 in Kontakt sein, unabhängig von der Auslenkung des Ambosses aus seiner Ruhelage heraus. Dies ist für die Anfertigung von gut dichtenden Schweißnähten vorteilhaft.

Dadurch, dass der Druck auf die beiden Schweißlippen immer in etwa gleich groß ist, verschleißt auch keine von diesen beiden Schweißlippen durch die Reibung bei der Bewegung zwischen Amboss 1 und Ultraschallhammer 16 stärker als die andere, sodass die Standzeiten hier sehr gut sind.

## Patentansprüche

1. Vorrichtung zum Ultraschallschweißen mit mindestens einem Ultraschallhammer (16) und mindestens einem Amboss,
**gekennzeichnet durch**
eine Lagerung des Ambosses (1) an einem Parallelhebel (2), der zwei Hebel (6, 7) aufweist, die um Achsen (8, 9) schwenkbar gelagert und parallel zueinander ausgerichtet sind, derart, dass Parallelität einer Oberfläche des Ambosses und des Ultraschallhammers bei jeder Position gewährleistet ist.

2. Vorrichtung nach Anspruch 1, **dadurch gekennzeichnet, dass** der Amboss (1) an dem Parallelhebel (2) hängend gelagert ist.

3. Vorrichtung nach Anspruch 1 oder 2, **dadurch gekennzeichnet, dass** der Parallelhebel (2) an einem Halter (3) befestigt ist, der um eine Achse (4) schwenkbar ist.

4. Vorrichtung nach Anspruch 3, **dadurch gekennzeichnet, dass** die Achse (4), um die der Halter (3) schwenkbar ist, in etwa senkrecht zu den Achsen (8, 9) liegt, um die der Parallelhebel (2) schwenkt.

5. Vorrichtung nach einem der Ansprüche 1 bis 4, **dadurch gekennzeichnet, dass** der Amboss (1) mit Vorspannmitteln (14), wie etwa Federn, elastischen Elementen, wie etwa Gummielementen oder Druckluftfedern in eine Richtung zu einem Ultraschallhammer (16) vorgespannt ist.

6. Vorrichtung nach einem der Ansprüche 1 bis 5, **dadurch gekennzeichnet, dass** der Amboss (1) mit einem Dämpfungsmittel (14) gekoppelt ist, das die Bewegung des Ambosses (1) dämpft.

7. Vorrichtung nach einem der Ansprüche 1 bis 6 , **dadurch gekennzeichnet, dass** mehrere Ambosse (1a, 1b, 1c, 1d) vorgesehen sind, wobei diese nebeneinander angeordnet sind.

8. Vorrichtung nach einem der Ansprüche 1 bis 7 , **dadurch gekennzeichnet, dass** mehrere Ambosse (1a, 1b, 1c, 1d) vorgesehen sind und jeder an einem eigenen Parallelhebel (2) gelagert ist.

9. Vorrichtung nach Anspruch 8, **dadurch gekennzeichnet, dass** jeder Parallelhebel (2a, 2b, 2c, 2d) an einem schwenkbaren Halter angeordnet ist, wobei die verschiedenen Halter (3a, 3b, 3c, 3d) vorzugsweise an einem gemeinsamen Träger (5) gelagert sind.

10. Vorrichtung nach einem der Ansprüche 1 bis 9, **dadurch gekennzeichnet, dass** die Vorrichtung zum Ultraschallschweißen von Folien, insbesondere von Verbundfolien, vorgesehen ist.

11. Vorrichtung nach einem der Ansprüche 1 bis 10, **dadurch gekennzeichnet, dass** die Vorrichtung zum Verschweißen von gefüllten Folienbeuteln (17) vorgesehen ist, insbesondere in Kombination mit einer Füllstation für Folienbeutel (17).

## Claims

1. Device for ultrasonic welding with at least one ultrasonic hammer (16) and at least one anvil,
**characterised by**
mounting of the anvil (1) on a parallel lever (2) comprising two levers (6, 7) which are mounted for swivelling about axles (8, 9) and are aligned parallel to one another, such that parallelism of a surface of the anvil and the ultrasonic hammer is ensured in any position.

2. Device according to Claim 1, **characterised in that** the anvil (1) is mounted suspended on the parallel lever (2).

3. Device according to Claim 1 or 2, **characterised in that** the parallel lever (2) is fastened to a holder (3) which can be swivelled about an axle (4).

4. Device according to Claim 3, **characterised in that** the axle (4), about which the holder (3) can be swivelled, is located approximately perpendicular to the axles (8, 9), about which the parallel lever (2) swivels.

5. Device according to one of the Claims 1 to 4, **characterised in that** the anvil (1) is pretensioned with pretensioning means (14), such as springs, elastic elements, such as rubber elements or compressed air springs, in a direction of an ultrasonic hammer (16).

6. Device according to one of the Claims 1 to 5, **characterised in that** the anvil (1) is linked to a damping means (14) which damps the movement of the anvil (1).

7. Device according to one of the Claims 1 to 6, **characterised in that** a number of anvils (1a, 1b, 1c, 1d) are provided, wherein they are arranged adjacent to one another.

8. Device according to one of the Claims 1 to 7, **characterised in that** a number of anvils (1a, 1b, 1c, 1d) are provided and each is mounted on a dedicated parallel lever (2).

9. Device according to Claim 8, **characterised in that** each parallel lever (2a, 2b, 2c, 2d) is arranged on a swivelling holder, wherein the various holders (3a, 3b, 3c, 3d) are preferably mounted on a common carrier (5).

10. Device according to one of the Claims 1 to 9, **characterised in that** the device is provided for the ultrasonic welding of film, in particular of compound film.

11. Device according to one of the Claims 1 to 10, **characterised in that** the device is provided for the welding of filled plastic bags (17), in particular in combination with a filling station for plastic bags (17).

## Revendications

1. Dispositif de soudage par ultrason comportant au moins un marteau à ultrason (16) et au moins une enclume,
**caractérisé par**
un montage de l'enclume (1) sur un levier parallèle (2) qui comporte deux leviers (6, 7) pivotants autour d'axes (8, 9) et parallèles entre eux, de telle sorte que le parallélisme d'une surface de l'enclume et du marteau à ultrason est assuré dans toutes les positions.

2. Dispositif selon la revendication 1, **caractérisé en ce que** l'enclume (1) est montée par suspension au levier parallèle (2).

3. Dispositif selon la revendication 1 ou 2, **caractérisé en ce que** le levier parallèle (2) est fixé à un support (3) pivotant autour d'un axe (4).

4. Dispositif selon la revendication 3, **caractérisé en ce que** l'axe (4) autour duquel pivote le support (3) est essentiellement perpendiculaire à l'axe (8, 9) autour duquel pivote le levier parallèle (2).

5. Dispositif selon l'une des revendications 1 à 4, **caractérisé en ce que** l'enclume (1) est précontrainte dans une direction vers un marteau à ultrason (16) par des moyens de précontrainte (14) tels que des ressorts, par des éléments élastiques tels que des éléments en caoutchouc, ou par des ressorts pneumatiques.

6. Dispositif selon l'une des revendications 1 à 5, **caractérisé en ce que** l'enclume (1) est accouplée à un moyen d'amortissement (14) qui amortit le déplacement de l'enclume (1).

7. Dispositif selon l'une des revendications 1 à 6, **caractérisé en ce que** plusieurs enclumes (1a, 1b, 1c, 1d) sont pourvues, dans lequel ces enclumes sont agencées les unes à côté des autres.

8. Dispositif selon l'une des revendications 1 à 7, **caractérisé en ce que** plusieurs enclumes (1a, 1b, 1c, 1d) sont pourvues et chacune est montée sur un levier parallèle (2) individuel.

9. Dispositif selon la revendication 8, **caractérisé en ce que** chaque levier parallèle (2a, 2b, 2c, 2d) est agencé sur un support pivotant, dans lequel les différents supports (3a, 3b, 3c, 3d) sont préférablement montés sur une poutre commune (5).

10. Dispositif selon l'une des revendications 1 à 9, **caractérisé en ce que** le dispositif est prévu pour le soudage de films par ultrason, en particulier de films d'assemblage.

11. Dispositif selon l'une des revendications 1 à 10, **caractérisé en ce que** le dispositif est prévu pour souder des poches de film remplies (17), en particulier en combinaison avec une station de remplissage de poches de film (17).
